# EUROPEAN PATENT APPLICATION

(11) **EP 4 300 321 A1**
(43) Date of publication of application: **03.01.2024**
(21) Application number: 22759165.8
(22) Date of filing: 18.01.2022
(51) Int. Cl.: G06F 16/25, G06F 16/26

(54) **OPERATION SUPPORT DEVICE, SYSTEM, AND METHOD, AND COMPUTER-READABLE MEDIUM**

(30) Priority: 25.02.2021 JP 2021028304
(71) Applicant: NEC Communication Systems, Ltd., Minato-ku Tokyo 108-0073 (JP)
(72) Inventor: IMAZU Kazuto, Tokyo 108-0073 (JP); GONGENRYO Takeshi, Tokyo 108-0073 (JP); MATSUDA Teruyoshi, Tokyo 108-0073 (JP); ICHINOSE Shohei, Tokyo 108-0073 (JP); EBISAWA Yuta, Tokyo 108-0073 (JP)
(74) Representative: Betten & Resch
(86) International application number: PCT/JP2022/001645
(87) International publication number: WO 2022/181122

(57) **Abstract**

An operation support apparatus (1) includes: a registration unit (11) configured to register a data source definition and a screen definition, the data source definition containing a connection method, connection destination information, and a data attribute for accessing a database of an external system, the screen definition containing a data attribute of a processing target and a display format of target data; a specification unit (12) configured to specify a screen definition designated by a screen display request received from a request source, and specify a data source definition corresponding to a data attribute contained in the specified screen definition; a selection unit (13) configured to select connection processing means corresponding to a connection method contained in the specified data source definition; a data acquisition unit (14) configured to use the selected connection processing means to acquire target data from the database on a basis of connection destination information and a data attribute contained in the specified data source definition; a generation unit (15) configured to generate display screen information containing a display format contained in the specified screen definition and the acquired target data; and an output unit (16) configured to output the generated display screen information to the request source.

## Description

### Technical Field

The present invention relates to an operation support apparatus, a system, a method, and a program, and particularly, relates to an operation support apparatus, a system, a method, and a program for supporting operation of an information system.

### Background Art

In order to conduct sales analysis and marketing analysis from the content of a database of an information system operated by companies and the like, they are increasingly using BI (Business Intelligence) tools. Patent Literature 1 discloses a technique related to a data analysis processing apparatus. Patent Literature 2 discloses a technique related to a method of jointly creating a visualization dashboard.

### Citation List

### Patent Literature

Patent Literature 1: Japanese Unexamined Patent Application Publication No. 2019-040287
Patent Literature 2: Japanese Unexamined Patent Application Publication No. 2010-157219

### Summary of Invention

### Technical Problem

Here, there are a wide variety of information systems operated by the companies and the like. For that reason, in order to perform the analysis described above, it is desirable to access databases of a plurality of information systems to execute a flexible display control for analysis. However, in Patent Literatures 1 and 2, there is a problem that a database as an access target is fixed and restriction of the data content of a display target thereby becomes large.

The present disclosure has been made to solve such problems. It is an object of the present disclosure to provide an operation support apparatus, a system, a method, and a program for supporting operation of an information system by causing the information system to execute connection settings for a wide variety of databases and a display control of a screen flexibly and easily.

### Solution to Problem

An operation support apparatus according to a first aspect of the present disclosure includes:
a registration unit configured to register a data source definition and a screen definition, the data source definition containing a connection method, connection destination information, and a data attribute for accessing a database managed by an external system, the screen definition containing a data attribute of a processing target and a display format of target data;
a specification unit configured to specify a screen definition designated by a screen display request received from a request source, and specify a data source definition corresponding to a data attribute contained in the specified screen definition;
a selection unit configured to select connection processing means corresponding to a connection method contained in the specified data source definition;
a data acquisition unit configured to use the selected connection processing means to acquire target data from the database on a basis of connection destination information and a data attribute contained in the specified data source definition;
a generation unit configured to generate display screen information containing a display format contained in the specified screen definition and the acquired target data; and
an output unit configured to output the generated display screen information to the request source.

An operation support system according to a second aspect of the present disclosure includes:
a database managed by an external system; and
an operation support apparatus communicably connected to the external system,
wherein the operation support apparatus includes:
   a registration unit configured to register a data source definition and a screen definition, the data source definition containing a connection method, connection destination information, and a data attribute for accessing the database managed by the external system, the screen definition containing a data attribute of a processing target and a display format of target data;
   a specification unit configured to specify a screen definition designated by a screen display request received from a request source, and specify a data source definition corresponding to a data attribute contained in the specified screen definition;
   a selection unit configured to select connection processing means corresponding to a connection method contained in the specified data source definition;
   a data acquisition unit configured to use the selected connection processing means to acquire target data from the database on a basis of connection destination information and a data attribute contained in the specified data source definition;
   a generation unit configured to generate display screen information containing a display format contained in the specified screen definition and the acquired target data; and
   an output unit configured to output the generated display screen information to the request source.

An operation support method according to a third aspect of the present disclosure includes:
registering a data source definition and a screen definition, the data source definition containing a connection method, connection destination information, and a data attribute for accessing a database managed by an external system, the screen definition containing a data attribute of a processing target and a display format of target data;
specifying a screen definition designated by a screen display request received from a request source, and specify a data source definition corresponding to a data attribute contained in the specified screen definition;
selecting connection processing means corresponding to a connection method contained in the specified data source definition;
using the selected connection processing means to acquire target data from the database on a basis of connection destination information and a data attribute contained in the specified data source definition;
generating display screen information containing a display format contained in the specified screen definition and the acquired target data; and
outputting the generated display screen information to the request source.

An operation support program according to a fourth aspect of the present disclosure causes a computer to execute:
a registration process configured to register a data source definition and a screen definition, the data source definition containing a connection method, connection destination information, and a data attribute for accessing a database managed by an external system, the screen definition containing a data attribute of a processing target and a display format of target data;
a specification process configured to specify a screen definition designated by a screen display request received from a request source, and specify a data source definition corresponding to a data attribute contained in the specified screen definition;
a selection process configured to select connection processing means corresponding to a connection method contained in the specified data source definition;
a data acquisition process configured to use the selected connection processing means to acquire target data from the database on a basis of connection destination information and a data attribute contained in the specified data source definition;
a generation process configured to generate display screen information containing a display format contained in the specified screen definition and the acquired target data; and
an output process configured to output the generated display screen information to the request source.

### Advantageous Effects of Invention

According to the present disclosure, there are provided an operation support apparatus, a system, a method, and a program for supporting operation of an information system by causing the information system to execute connection settings for a wide variety of databases and a display control of a screen flexibly and easily.

### Brief Description of Drawings

Fig. 1 is a block diagram illustrating a configuration of an operation support apparatus according to a first example embodiment.
Fig. 2 is a flowchart illustrating a flow of an operation support method according to the first example embodiment.
Fig. 3 is a block diagram illustrating the overall configuration of an operation support system according to a second example embodiment.
Fig. 4 is a block diagram illustrating a configuration of an operation support apparatus according to the second example embodiment.
Fig. 5 is a view illustrating a configuration example of data source definition according to the second example embodiment.
Fig. 6 is a view illustrating a configuration example of screen definition according to the second example embodiment.
Fig. 7 is a view illustrating an example of a registration screen of the data source definition according to the second example embodiment.
Fig. 8 is a flowchart illustrating a flow of registration processing of the data source definition according to the second example embodiment.
Fig. 9 is a view illustrating an example of a registration screen of the screen definition according to the second example embodiment.
Fig. 10 is a flowchart illustrating a flow of registration processing of the screen definition according to the second example embodiment.
Fig. 11 is a flowchart illustrating a flow of screen display processing according to the second example embodiment.
Fig. 12 is a view illustrating an example of a display screen according to the second example embodiment.
Fig. 13 is a block diagram illustrating the overall configuration of an operation support system according to a third example embodiment.
Fig. 14 is a view illustrating an example of a display screen according to the third example embodiment.
Fig. 15 is a view illustrating a configuration example of screen definition information according to a fourth example embodiment.
Fig. 16 is a view illustrating an example of a display screen according to the fourth example embodiment.

### Example Embodiments

Hereinafter, example embodiments of the present disclosure will be described with reference to the drawings. The same or corresponding elements are respectively denoted by the same reference numerals, and in order to clarify explanation thereof, redundant descriptions thereof will be omitted appropriately.

### <First Example Embodiment>

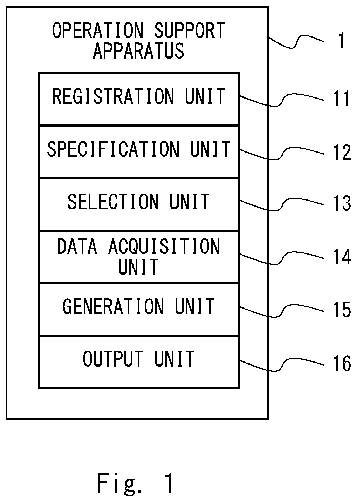

Fig. 1 is a block diagram illustrating a configuration of an operation support apparatus 1 according to a first example embodiment. The operation support apparatus 1 is an information processing apparatus for supporting an operation of an information system (an external system). Here, the operation support apparatus 1 is connected to the external system or an operation terminal via a communication network (not illustrated in the drawings, hereinafter, also referred to simply as a "communication network"). The external system manages a database, and may be a database system itself or have an access interface between the outside and the database. The operation terminal is manipulated by an operational user, and is an information processing apparatus for managing the external system via the operation support apparatus 1. Note that the operation terminal may be a management terminal manipulated by an administrator of the external system. The operation support apparatus 1 includes a registration unit 11, a specification unit 12, a selection unit 13, a data acquisition unit 14, a generation unit 15, and an output unit 16.

The registration unit 11 is configured to register a data source definition and a screen definition. The data source definition is information that contains a connection method, connection destination information, and a data attribute for accessing the database managed by the external system. The screen definition is information that contains a data attribute of a processing target and a display format of target data.

The specification unit 12 is configured to specify a screen definition designated by a screen display request received from a request source. Further, the specification unit 12 is also configured to specify a data source definition corresponding to a data attribute contained in the specified screen definition.

The selection unit 13 is configured to select connection processing means corresponding to a connection method contained in the specified data source definition. Here, the connection processing means is a plurality of software modules or a hardware interface circuit that exists for each connection method. The connection processing means executes connection processing with the database for the external system on the basis of the connection destination information and the data attribute. Alternatively, the connection processing means transmits a data acquisition request to the external system on the basis of the connection destination information and the data attribute.

The data acquisition unit 14 is configured to use the selected connection processing means to acquire target data from the database on the basis of the connection destination information and the data attribute contained in the specified data source definition.

The generation unit 15 is configured to generate display screen information containing the display format contained in the specified screen definition and the acquired target data. Here, the display screen information may be a display screen for displaying the acquired target data in accordance with the display format contained in the specified screen definition. Alternatively, the display screen information may be screen generating control information that causes the request source to generate a display screen for displaying the acquired target data in accordance with the display format.

The output unit 16 is configured to output the generated display screen information to the request source.

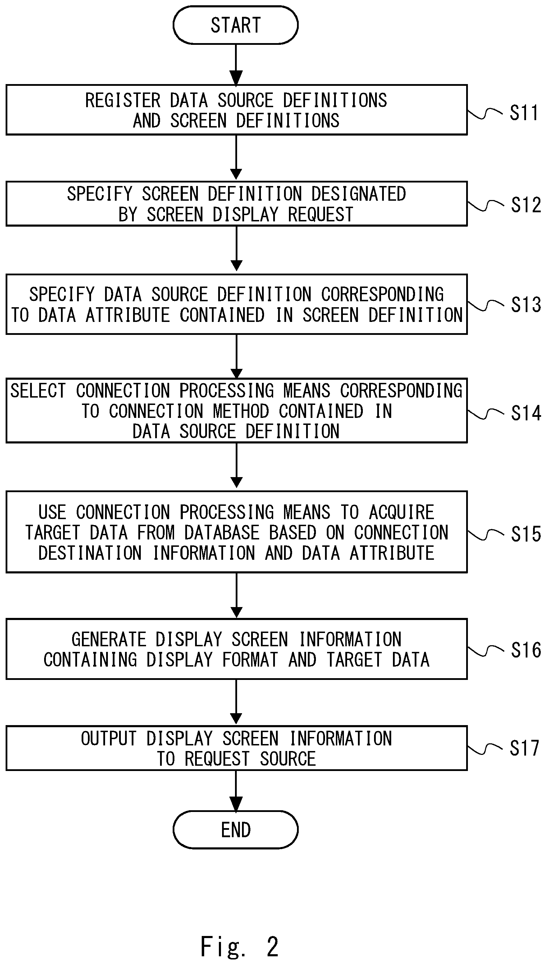

Fig. 2 is a flowchart illustrating a flow of an operation support method according to the first example embodiment. First, the registration unit 11 registers data source definitions and screen definitions (S11). For example, the registration unit 11 receives, as input information, data source definitions and screen definitions from a management terminal. Then, the registration unit 11 registers the received input information in an internal or external storage device. Note that the registration unit 11 may receive the input information via an input device (not illustrated in the drawings) connected to the operation support apparatus 1 in response to input manipulation of an administrative user.

Next, the specification unit 12 receives a screen display request from a request source. The request source is an operation terminal or an operation system (not illustrated in the drawings), for example. Information for specifying a screen definition is designated by the screen display request. Then, the specification unit 12 specifies the screen definition designated by the screen display request received from the request source (S12). Then, the specification unit 12 specifies a data source definition corresponding to a data attribute contained in the screen definition specified at Step S12 (S13). Note that the specification unit 12 specifies, from the plural kinds of data source definitions and the plural kinds of screen definitions registered at Step S11, the designated screen definition and the data source definition corresponding to the data attribute.

Subsequently, the selection unit 13 selects connection processing means corresponding to a connection method contained in the data source definition specified at Step S13 (S14). Here, each of plural kinds of connection processing means is stored in a storage device (not illustrated in the drawings) provided inside or outside the operation support apparatus 1. Then, the selection unit 13 selects, from the storage device, the connection processing means corresponding to the connection method contained in the specified data source definition.

Then, the data acquisition unit 14 uses the connection processing means selected at Step S14 to acquire target data from a database of an external system on the basis of connection destination information and the data attribute contained in the specified data source definition (S15).

Subsequently, the generation unit 15 generates display screen information, which contains a display format included in the screen definition specified at Step S12 and the target data acquired at Step S15 (S16).

Then, the output unit 16 outputs the display screen information generated at Step S16 to the request source (S17). As a result, the request source causes a display device to display a display screen based on the display screen information received from the operation support apparatus 1. For example, in a case where the display screen information is a display screen, at Step S16, the generation unit 15 generates a display screen (for example, DOM (Document Object Model)) for displaying the target data acquired at Step S15 in accordance with the display format contained in the screen definition specified at Step S12. Then, at Step S17, the output unit 16 outputs the display screen generated at Step S16 to the request source. In that case, the operation terminal of the request source displays the display screen in accordance with the received DOM. Alternatively, the display screen information may be screen generating control information (for example, information in a JSON (JavaScript (registered trademark) Object Notation) format). In that case, at Step S16, the generation unit 15 generates screen generating control information that causes the request source to generate a display screen for displaying the target data acquired at Step S15 in accordance with the display format contained in the screen definition specified at Step S12. Then, at Step S17, the output unit 16 outputs the screen generating control information generated at Step S16 to the request source. In that case, the operation terminal of the request source generates the display screen on the basis of the received screen generating control information, and displays it. Therefore, an operational user can confirm, through the display screen, the content of data corresponding to the data attribute set by the data source definition and the screen definition among the data in the database of the external system as an operational target. Further, the operational user can confirm, through the display screen, data corresponding to the data attribute arranged in accordance with the display format defined by the screen definition.

Thus, in the present example embodiment, by registering settings of the data source definition in accordance with the connection method that the external system or the database supports as the external interface, it is possible to realize access to the database without modifying the system for various external systems. Further, by registering settings of the display format according to the needs of the operational user so as to include them in the screen definition, it is possible to visually confirm the data content in a flexible layout without depending upon the external system. For example, it is possible to display it in a display format different from that of the display screen of the database provided by the external system. Alternatively, even in a case where the external system does not have a display interface, it is possible to easily generate a display screen having the data content of the database. Further, by setting and registering the data attribute according to the needs of the operational user so as to correspond to the data source definition and the screen definition, operationally necessary data can be displayed, and data that are not required to be displayed can be excluded. Namely, it is possible to easily realize selection and display of just enough data. For that reason, in the present example embodiment, by flexibly and easily executing the connection settings for various databases and the display control of the screen, it is possible to support the operation of the information system.

Note that the operation support apparatus 1 includes a processor, a memory, and a storage device as an unillustrated configuration. Further, a computer program in which processing of the operation support method according to the present example embodiment is implemented is stored in the storage device. Then, the processor loads the computer program from the storage device into the memory, and executes the computer program. As a result, the processor can realize functions of the registration unit 11, the specification unit 12, the selection unit 13, the data acquisition unit 14, the generation unit 15, and the output unit 16.

Alternatively, each of the registration unit 11, the specification unit 12, the selection unit 13, the data acquisition unit 14, the generation unit 15, and the output unit 16 may be realized by dedicated hardware. Further, a part or all of each component of each device may be realized by a general-purpose or special-purpose circuit (circuitry), processor, or the like or a combination thereof. These may be configured by a single chip, or may be configured by a plurality of chips connected to each other via a bus. A part or all of each component of each device may be realized by a combination of the circuit and the program described above. Further, a CPU (Central Processing Unit), a GPU (Graphics Processing Unit), a FPGA (field-programmable gate array), quantum processor (quantum computer control chip), or the like can be used as the processor.

Further, in a case where a part or all of each component of the operation support apparatus 1 is realized by a plurality of information processing apparatuses, circuits, or the like, the plurality of information processing apparatuses, the circuits, or the like may be centrally arranged or arranged so as to be distributed to each other. For example, the information processing apparatuses, the circuits, or the like may be realized as a form in which each is connected via a communication network, such as a client-server system, or a cloud computing system. Further, the functions of the operation support apparatus 1 may be provided in a SaaS (Software as a Service) format.

### <Second example embodiment>

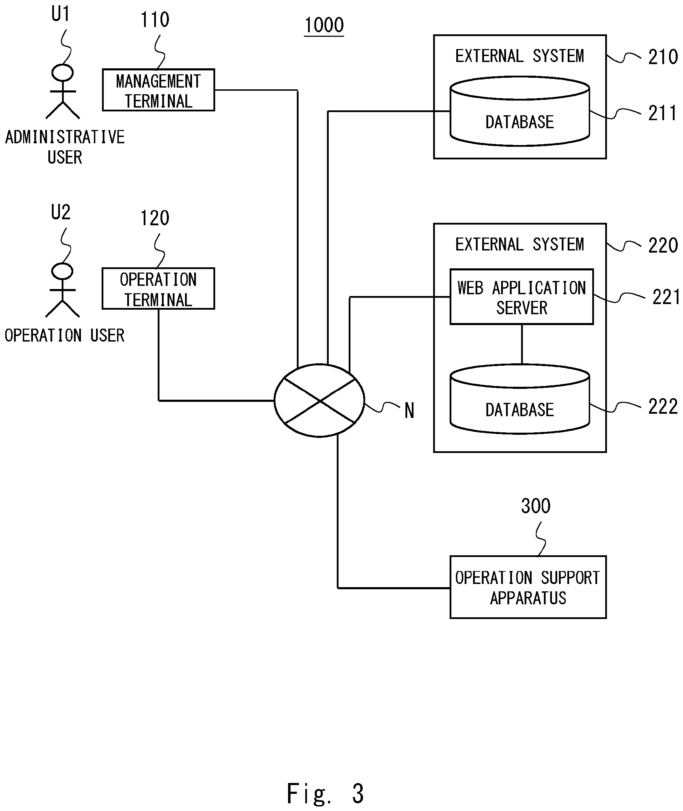

A second example embodiment is a concrete example of the first example embodiment described above. Fig. 3 is a block diagram illustrating the overall configuration of an operation support system 1000 according to the second example embodiment. The operation support system 1000 is an information system for supporting an operation of a plurality of external systems 210 and 220 operated by an operational user U2. The operation support system 1000 includes a management terminal 110, an operation terminal 120, the external system 210, the external system 220, and an operation support apparatus 300. Each of the management terminal 110, the operation terminal 120, the external system 210, the external system 220, and the operation support apparatus 300 are respectively connected to each other via a network N. Here, the network N is a wired or wireless communication line, for example, the Internet.

An administrative user U1 and the operational user U2 are users who manage and operate information systems such as the external system 210 and the external system 220. The administrative user U1 and the operational user U2 use the operation support apparatus 300, for example, to analyze data in a database 211 or a database 222. The administrative user U1 inputs a data source definition of data as an analysis target and a screen definition for displaying the data as the analysis target into the management terminal 110, and registers them in the operation support apparatus 300. The operational user U2 carries out manipulation on the operation terminal 120 to display a display screen for displaying the data as the analysis target. Note that the administrative user U1 and the operational user U2 may be the same person.

The management terminal 110 is an information terminal manipulated by the administrative user U1. The operation terminal 120 is an information terminal manipulated by the operational user U2. Each of the management terminal 110 and the operation terminal 120 is an information processing apparatus such as a personal computer or a portable information terminal. Further, the management terminal 110 and the operation terminal 120 may be the same terminal.

The management terminal 110 transmits a registration request for the data source definition and the screen definition inputted from the administrative user U1 to the operation support apparatus 300 via the network N. Note that the management terminal 110 may use a setting tool (not illustrated in the drawings) in the operation support system 1000 to generate the registration request for the data source definition and the screen definition. The setting tool may be one for generating, as the registration request, an SQL (Structured Query Language) statement for inserting a record corresponding to the data source definition and the screen definition into a predetermined table of a database within the operation support apparatus 300 (will be described later). In that case, the management terminal 110 executes registration to the database of the operation support apparatus 300 via the network N by executing the SQL statement generated by the setting tool. Alternatively, the management terminal 110 may input the data source definition and the screen definition to a registration screen provided by the operation support apparatus 300 to execute the registration request to the input content.

The operation terminal 120 transmits, in response to manipulation of the operational user U2, a screen display request for displaying an analysis result and the like to the operation support apparatus 300 via the network N. Here, the screen display request is access destination information containing a screen definition ID (will be described later) for displaying a display screen. The access destination information may be a URL (Uniform Resource Locator), for example. In this case, the screen definition ID may be designated in the URL in addition to a host name of the operation support apparatus 300 and the like. Then, the operation terminal 120 receives display screen data as a response of the screen display request from the operation support apparatus 300 via the network N, and displays the display screen data on a display device. Alternatively, the operation terminal 120 receives screen generating control information (for example, information in a JSON format) as the response of the screen display request from the operation support apparatus 300 via the network N, and generate display screen data on the basis of the screen generating control information to display it on the display device.

The external system 210 is at least a part of an information system operated by the operational user U2. The external system 210 manages the database 211. The external system 210 may be a database system. The external system 210 connects to the database 211 via the network N using JDBC (Java (registered trademark) Database Connectivity) connection, for example, in response to a connection request from the operation support apparatus 300. Then, after connection, the external system 210 enables the operation support apparatus 300 to access the database 211.

The external system 220 is at least a part of an information system operated by the operational user U2. The external system 220 manages the database 222. Further, the external system 220 includes a WEB application server 221 connected to the database 222. The WEB application server 221 executes access (or a process) to the database 222 using a Web API (Application Programming Interface), for example, in response to an access request from the outside via the network N, and sends a processing result (a search result or the like) to a request source. REST (Representational State Transfer) may be used as the Web API (a connection method).

The operation support apparatus 300 is one example of the operation support apparatus 1 described above. The operation support apparatus 300 is an information processing apparatus that executes registration of a data source definition and a screen definition, generation and reply of display screen information according to a screen display request designating a screen definition. The operation support apparatus 300 may be made redundant by a plurality of servers, and each functional block may be realized by a plurality of computers.

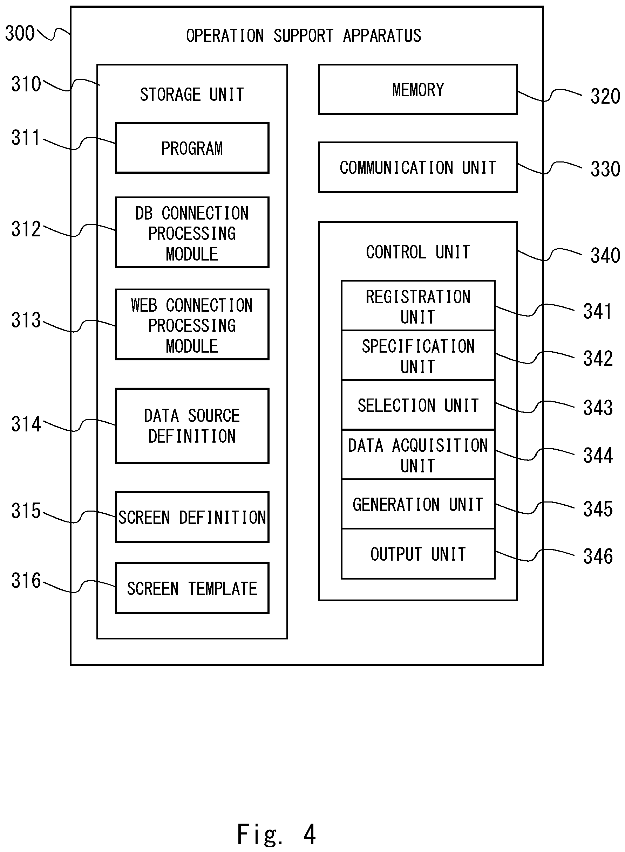

Next, the operation support apparatus 300 will be described in detail. Fig. 4 is a block diagram illustrating a configuration of the operation support apparatus 300 according to the second example embodiment. The operation support apparatus 300 includes a storage unit 310, a memory 320, a communication unit 330, and a control unit 340. The storage unit 310 is one example of a storage device such as a hard disk or a flash memory. The storage unit 310 stores a program 311, a DB connection processing module 312, a WEB connection processing module 313, a data source definition 314, a screen definition 315, and a screen template 316. The program 311 is a computer program in which processing of an operation support method according to the second example embodiment is implemented. Note that the program 311 may be one that includes the function of the setting tool described above.

The DB connection processing module 312 is a program module whose connection method corresponds to database connection (DB connection) (a first connection method) and that executes connection processing with the database. The DB connection processing module 312 is a class, a library function, or the like for making JDBC connection, for example.

The WEB connection processing module 313 is a program module whose connection method corresponds to WEB connection (a second connection method) and that executes connection and access to the database via a WEB. The WEB connection processing module 313 is a class, a library function, or the like for executing HTTP (Hypertext Transfer Protocol) access corresponding to REST connection, for example.

Note that the DB connection processing module 312 and the WEB connection processing module 313 may be included in the program 311.

The data source definition 314 is information that defines information specifying a database or a table in which data as a processing target are managed, a connection method for accessing a database, and information containing connection destination information and a data attribute. Further, the data attribute may include processing logic.

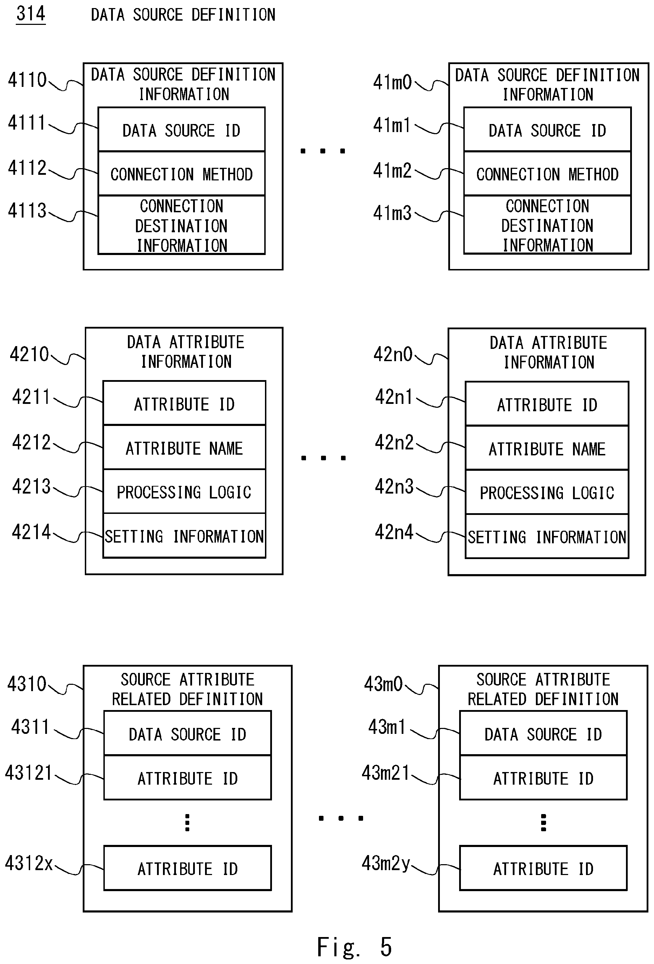

Fig. 5 is a view illustrating a configuration example of the data source definition 314 according to the second example embodiment. The data source definition 314 contains data source definition information 4110 to 41m0, data attribute information 4210 to 42n0, and source attribute related definitions 4310 to 43m0. Here, each of "m" and "n" is a natural number of two or more.

The data source definition information 4110 is information in which a data source ID 4111, a connection method 4112, and connection destination information 4113 are associated with each other. The data source ID 4111 is a data source, that is, identification information of a database. For example, the data source ID 4111 may be information for identifying an instance of the database 211 or the database 222. The connection method 4112 is information indicating a connection method to a data source. Specifically, the connection method 4112 is the database connection (the first connection method) or the WEB connection (the second connection method). For example, the connection method 4112 may be information indicating JDBC, REST, or the like. In case of the database connection, the connection destination information 4113 contains a type of DBMS (Database Management System), a DB server name, a DB instance name, a URL for DB connection, DB connectable user ID and password, a name of a table in which processing target data are stored, and the like. Further, in case of the WEB connection, the connection destination information 4113 contains a URL of an end point of Web API, an HTTP method, a URL query parameter, and the like. After that, the data source definition information 4120 (not illustrated in the drawings), ... , and the data source definition information 41m0 also have the similar configuration. For example, a data source ID 41m1, a connection method 41m2, and connection destination information 41m3 of the data source definition information 41m0 are the similar data to the data source ID 4111, the connection method 4112, and the connection destination information 4113, respectively.

The data attribute information 4210 is information in which an attribute ID 4211, an attribute name 4212, processing logic 4213, and setting information 4214 are associated with each other. The attribute ID 4211 is identification information of a data attribute of processing target data. The attribute name 4212 is a character string that indicates a name of a column (attribute) in a table in which the processing target data (a data attribute value) are stored. The processing logic 4213 is information that defines processing logic for a data attribute value acquired from the database. The processing logic 4213 is logic for processing and displaying the data attribute value, or logic for executing a sorting process (ascending or descending order) when displaying a list of a plurality of data attribute values. The setting information 4214 is information that defines various settings related to the data attribute of the processing target. The setting information 4214 contains option settings related to list display, form display, or map display, parameters to be passed to the processing logic 4213, and the like, for example. Further, the setting information 4214 may contain processing logic for generating a set of values that can be set to the form and display names thereof, and processing logic for switching between validating and invalidating editing form. The setting information 4214 may be described in the JSON format. Further, the processing logic 4213 or the processing logic in the setting information 4214 may be described in JavaScript (registered trademark), for example. After that, the data attribute information 4220 (not illustrated in the drawings), ... , and the data attribute information 42n0 also have the similar configuration. For example, an attribute ID 42n1, an attribute name 42n2, processing logic 42n3, and setting information 42n4 of the data attribute information 42n0 are the similar data to the attribute ID 4211, the attribute name 4212, the processing logic 4213, and the setting information 4214, respectively.

The source attribute related definition 4310 and the like are information that defines one-to-many relation between the data source definition information and the data attribute information. The source attribute related definitions 4310 to 43m0 correspond to the data source definition information 4110 to the data source definition information 41m0, respectively. The source attribute related definition 4310 is information in which a data source ID 4311, and attribute IDs 43121 to 4312x are associated with each other. For example, the data source ID 4311 is the data source ID 4111 of the data source definition information 4110, and each of the attribute IDs 43121 to 4312x is any of the attribute IDs 4211 to 42n1 of the data attribute information 4210 to 42n0. After that, the source attribute related definitions 4320 (not illustrated in the drawings), ... , and 43m0 also have the similar configuration. For example, the source attribute related definition 43m0 is information in which a data source ID 43m1 and attribute IDs 43m21 to 43m2y are associated with each other. For example, the data source ID 43m1 is the data source ID 41m1 of the data source definition information 41m0, and each of the attribute IDs 43m21 to 43m2y is any of the attribute IDs 4211 to 42n1 of the data attribute information 4210 to 42n0. Note that each of the "x" and "y" described above may be at least a natural number of one or more. Further, the attribute IDs may overlap among the source attribute related definitions 4310 to 43m0.

Returning to FIG. 4, the description will be continued.

The screen definition 315 is information that defines a display format for displaying processing target data, components of a screen, and the like. Further, the screen definition 315 is information that defines attribute information of a table of a database in which the processing target data are stored, processing for the processing target data, and the like. The screen definition 315 may contain a plurality of screen components. At least a part of the plurality of screen components includes a data attribute contained in the data source definition. Further, at least a part of the plurality of screen components may contain processing logic.

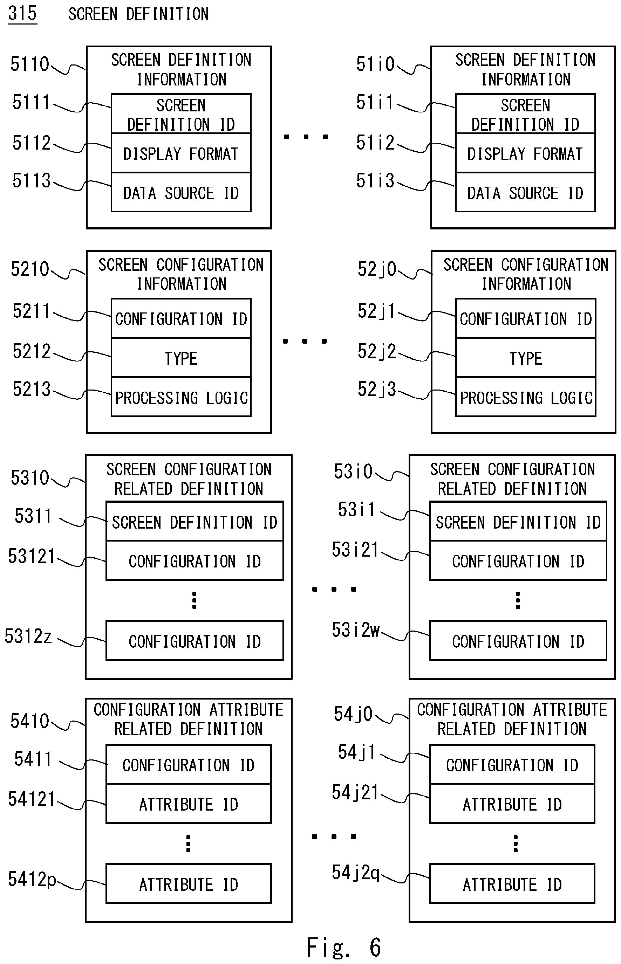

Fig. 6 is a view illustrating a configuration example of the screen definition according to the second example embodiment. The screen definition 315 contains screen definition information 5110 to 5110, screen configuration information 5210 to 52j0, screen configuration related definitions 5310 to 53i0, and configuration attribute related definitions 5410 to 54j0. Here, each of "i" and "j" is a natural number of two or more. The screen configuration information 5210 and the like are examples of screen components. Further, it can be said that the screen configuration information 5210 and the like contain definition of the data attribute by an attribute ID defined in the configuration attribute related definition 5410 and the like.

The screen definition information 5110 is information in which a screen definition ID 5111, a display format 5112, and a data source ID 5113 are associated with each other. The screen definition ID 5111 is identification information of a display screen. The screen definition ID 5111 is also information designated by a screen display request. Since the screen definition ID 5111 can be said to be part of the screen configuration information, it may be called a component ID, and identification information of the screen may exist therein separately. The display format 5112 is information that indicates a format of the display screen. As the display format 5112, for example, a list screen, a detailed display screen for data, or a dedicated map screen can be cited. However, it is not limited to these. The data source ID 5113 is identification information of a data source definition that contains a data attribute of processing target data used for the screen. Note that the data source ID 5113 may be two or more. Namely, the screen definition ID 5111 and the data source ID 5113 may be associated with each other by one to many. After that, the screen definition information 5120 (not illustrated in the drawings), ... , and the screen definition information 51i0 also have the similar configuration. For example, a screen definition ID 51i1, a display format 51i2, and a data source ID 51i3 of the screen definition information 51i0 are the similar data to the screen definition ID 5111, the display format 5112, and the data source ID 5113, respectively.

The screen configuration information 5210 is information in which a configuration ID 5211, a type 5212, and processing logic 5213 are associated with each other. The configuration ID 5211 is identification information of a screen component. Note that the configuration ID 5211 may be called a component ID. The type 5212 is information that indicates a type of the screen component. The type 5212 includes, for example, a button, a menu, a list, a form, a unique object, a graph, a header, a footer, metric, a map, and the like. However, they are not limited to these. The processing logic 5213 is information that defines processing logic for a data attribute value (processing target data) acquired from a database. Note that the configuration ID and the attribute ID are associated with each other by one to many in the configuration attribute related definition (will be described later). For that reason, the processing logic 5213 can be said to be, for example, information that defines processing logic for acquired data corresponding to attribute IDs 54121 to 5412p associated with a configuration ID 5411 (the configuration ID 5211) in the configuration attribute related definition 5410. Note that the processing logic 5213 is not essential, and may not be set depending upon the type 5212. Further, the screen configuration information 5210 may contain setting information that defines various settings for the component. As well as the setting information 4214 described above, the setting information may contain processing logic, or may be described in the JSON format. Further, the processing logic 5213 or the processing logic in the setting information may be described in JavaScript (registered trademark), for example. After that, the screen configuration information 5220 (not illustrated in the drawings), ... , and the screen configuration information 52j0 also have the similar configuration. For example, a configuration ID 52j1, a type 52j2, and processing logic 52j3 of the screen configuration information 52j0 are the similar data to the configuration ID 5211, the type 5212, and the processing logic 5213, respectively.

The screen configuration related definition 5310 or the like is information that defines one-to-many relation between the screen definition information and the screen configuration information. The screen configuration related definitions 5310 to 53i0 correspond to the screen definition information 5110 to 5110, respectively. The screen configuration related definition 5310 is information in which a screen definition ID 5311 and configuration IDs 53121 to 5312z are associated with each other. For example, the screen definition ID 5311 is the screen definition ID 5111 of the screen definition information 5110, and each of the configuration IDs 53121 to 5312z is any of the configuration IDs 5211 to 52j1 of the screen configuration information 5210 to 52j0. After that, the screen configuration related definitions 5320 (not illustrated in the drawings), ... , and 53i0 also have the similar configuration. For example, the screen configuration related definition 53i0 is information in which screen definition ID 53i1 is associated with configuration IDs 53i21 to 53i2w. For example, the screen definition ID 53i1 is the screen definition ID 5111 of the screen definition information 5110, and each of the configuration IDs 53i21 to 53i2w is any of the configuration IDs 5211 to 52j1 of the screen configuration information 5210 to 52j0. Note that each of the "z" and "w" described above may be at least a natural number of one or more. Further, the configuration IDs may overlap among the screen configuration related definitions 5310 to 53i0.

The configuration attribute related definition 5410 or the like is information that defines one-to-many relation between the screen configuration information and the data attribute information corresponding to the processing target data. The configuration attribute related definitions 5410 to 54j0 correspond to the screen configuration information 5210 to 52j0, respectively. The configuration attribute related definition 5410 is information in which the configuration ID 5411 and the attribute IDs 54121 to 5412p are associated with each other. For example, the configuration ID 5411 is the configuration ID 5211 of the screen configuration information 5210, and each of the attribute IDs 54121 to 5412p is any of the attribute IDs 4211 to 42n1 of the data attribute information 4210 to 42n0. After that, the configuration attribute related definitions 5420 (not illustrated in the drawings), ... , and 54j0 also have the similar configuration. For example, the configuration attribute related definition 54j0 is information in which the configuration ID 54j 1 and the attribute IDs 54j21 to 54j2q are associated with each other. For example, the configuration ID 54j1 is the configuration ID 52j1 of the screen configuration information 52j0, and each of the attribute IDs 54j21 to 54j2q is any of the attribute IDs 4211 to 42n1 of the data attribute information 4210 to 42n0. Note that each of the "p" and "q" described above may be at least a natural number of one or more. Further, the attribute IDs may overlap among the configuration attribute related definitions 5410 to 54j0.

Returning to FIG. 4, the description will be continued.

The screen template 316 is template information that is used when a display screen is to be generated. For example, the screen template 316 may exist for each display format. The screen template 316 may be configured to display zero to plural pieces of screen configuration information for each type of screen configuration information.

The memory 320 is a volatile storage device such as a RAM (Random Access Memory), and is a storage region for temporarily holding information at the time of operation of the control unit 340. The communication unit 330 is a communication interface with the network N.

The control unit 340 is a processor for controlling each configuration of the operation support apparatus 300, that is, a control device. The control unit 340 loads the program 311 from the storage unit 310 into the memory 320, and executes the program 311. As a result, the control unit 340 realizes functions of a registration unit 341, a specification unit 342, a selection unit 343, a data acquisition unit 344, a generation unit 345, and an output unit 346.

The registration unit 341 is one example of the registration unit 11 described above. The registration unit 341 registers the data source definition 314 and the screen definition 315. Specifically, the registration unit 341 generates the data source definition 314 on the basis of a registration request related to the data source definition received from the management terminal 110, and stores it in the storage unit 310. Further, the registration unit 341 generates the screen definition 315 on the basis of a registration request related to the screen definition received from the management terminal 110, and stores it in the storage unit 310. Note that the registration unit 341 may have the function of the setting tool described above. Alternatively, the registration unit 341 may cause the management terminal 110 to display a registration screen, and receive a registration request via the registration screen.

The specification unit 342 is one example of the specification unit 12 described above. The specification unit 342 receives a screen display request from the operation terminal 120, and specifies a screen definition ID designated to the screen display request. Then, the specification unit 342 specifies screen definition information containing the specified screen definition ID from the screen definition 315, and specifies a data source ID contained in the specified screen definition information. Further, the specification unit 342 specifies one or more pieces of screen configuration information associated with the specified screen definition ID from screen configuration related definition. Further, the specification unit 342 specifies attribute IDs respectively associated with configuration IDs of the specified screen configuration information from a configuration attribute related definition. Then, the specification unit 342 specifies data source definition information containing the specified data source ID from the data source definition 314. Then, the specification unit 342 specifies one or more attribute IDs associated with the specified data source ID from a source attribute related definition. Then, the specification unit 342 specifies attribute ID group (data attributes) specified from the configuration attribute related definition from attribute ID groups specified from the source attribute related definition.

The selection unit 343 is one example of the selection unit 13 described above. The selection unit 343 selects connection processing means corresponding to a connection method contained in the specified data source definition information. For example, in a case where the connection method is database connection, the selection unit 343 selects the DB connection processing module 312. Further, in a case where the connection method is WEB connection, the selection unit 343 selects the WEB connection processing module 313.

The data acquisition unit 344 is one example of the data acquisition unit 14 described above. The data acquisition unit 344 uses the selected connection processing means to acquire target data from a database on the basis of connection destination information and data attribute contained in the specified data source definition. For example, in a case where the connection method is database connection, the data acquisition unit 344 uses the selected DB connection processing module 312 to execute connection processing with the database 211 of the external system 210 on the basis of the connection destination information. Then, after the connection processing, the data acquisition unit 344 executes search processing for data corresponding to the specified data attribute in the database 211, thereby acquiring the target data. Further, in a case where the connection method is WEB connection, the data acquisition unit 344 uses the selected WEB connection processing module 313 to transmit a data acquisition request containing the connection destination information and the data attribute to the external system 220. Then, the data acquisition unit 344 receives a response from the external system 220, thereby acquiring the target data.

The generation unit 345 is one example of the generation unit 15 described above. The generation unit 345 generates a display screen for displaying the acquired target data in accordance with a display format contained in the specified screen definition. Specifically, the generation unit 345 generates the display screen so as to arrange respective screen components at display positions according to the display format, and display the target data acquired by the data acquisition unit 344 on a screen component including a data attribute. In particular, the generation unit 345 generates the display screen so as to contain processing logic included in the arranged screen component. Further, the generation unit 345 generates the display screen so as to contain processing logic included in the data attribute corresponding to the acquired target data. Note that the generation unit 345 may generate screen generating control information without generating the display screen. The screen generating control information is information for causing a request source to generate a display screen on which the acquired target data are displayed in accordance with the display format.

The output unit 346 is one example of the output unit 16 described above. The output unit 346 outputs the generated display screen (or the screen generating control information) to the operation terminal 120 that is the request source.

Subsequently, registration processing of the data source definition and the screen definition according to the second example embodiment will be described. Here, a case where a data source definition is registered via a registration screen for the data source definition provided by the operation support apparatus 300 will be described. For example, in response to manipulation of the administrative user U1, the management terminal 110 transmits a display request for the registration screen of the data source definition to the operation support apparatus 300 via the network N. The operation support apparatus 300 returns the registration screen of the data source definition to the management terminal 110 in response to the display request. In response, the management terminal 110 displays the received registration screen.

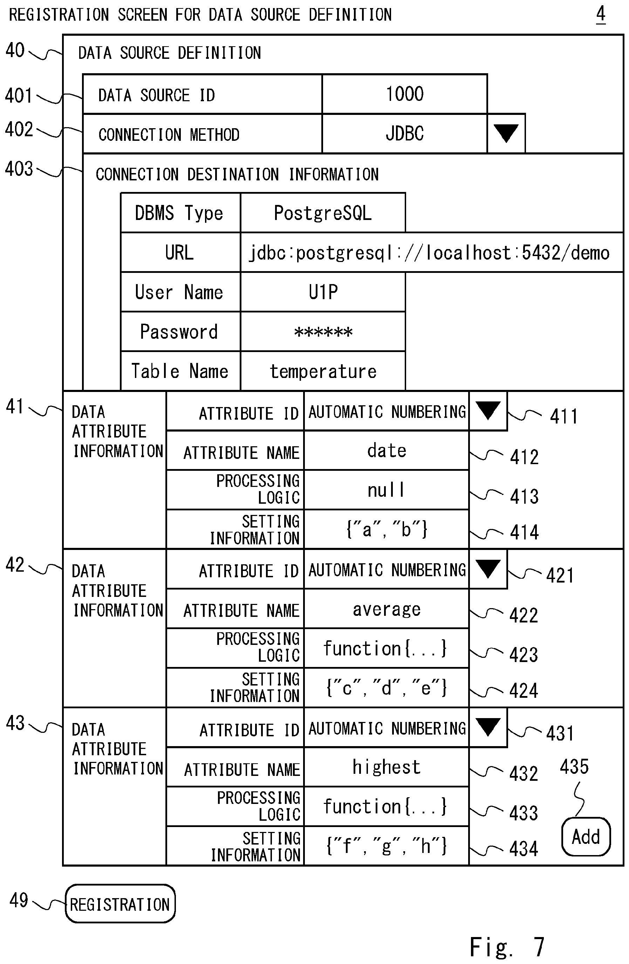

Fig. 7 is a view illustrating an example of a registration screen 4 for a data source definition according to the second example embodiment. The registration screen 4 for the data source definition includes a data source definition 40, data attribute information 41, 42, and 43, and a registration button 49. Further, Fig. 7 illustrates a state in the middle of input by the administrative user U1. The data source definition 40 is an entry field for a data source ID 401, a connection method 402, and connection destination information 403. Note that as the connection method 402, "JDBC" or "REST" can be selected from a pull-down, and an example in which "JDBC" is selected is illustrated. Further, as the connection destination information 403, an example in which a table name is inputted is illustrated. A DBMS type, URL for DB connection, DB connectable user ID and password, processing target data are stored in the table name. Note that in a case where "REST" is selected in the connection method 402, the display content of the connection destination information 403 is also changed into an entry field corresponding to "REST".

The data attribute information 41 to 43 are entry fields for data attribute groups corresponding to processing target data among columns of the table inputted to the connection destination information 403. The data attribute information 41 contains an attribute ID 411, an attribute name 412, processing logic 413, and setting information 414. Similarly, the data attribute information 42 contains an attribute ID 421, an attribute name 422, processing logic 423, and setting information 424. Further, the data attribute information 43 contains an attribute ID 431, an attribute name 432, processing logic 433, setting information 434, and an Add button 435. In particular, the attribute names 412, 422, and 432 are examples in each of which a character string of a column name defined in the table "temperature" is inputted. When the Add button 435 is pressed, a new entry field for data attribute information is additionally displayed. Note that in a case where anything other than "automatic numbering" is selected from the pull-down for the attribute IDs 411, 421, and 431, input values by the administrative user U1 may be displayed.

The registration button 49 is a button for transmitting, to the operation support apparatus 300, a registration request containing the input content of the data source definition 40 and the data attribute information 41 to 43 when pressed.

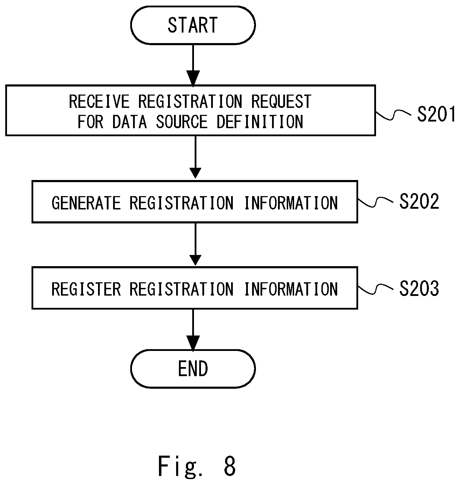

Fig. 8 is a flowchart illustrating a flow of registration processing of a data source definition according to the second example embodiment. First, the management terminal 110 receives and displays the input content of a registration screen 4 for a data source definition by input manipulation of the administrative user U1. At this time, when the Add button 435 or the like is pressed by the administrative user U1, the management terminal 110 additionally displays an entry field for data attribute information, and further receives and displays the input content. Then, when the management terminal 110 receives press of the registration button 49 from the administrative user U1, the management terminal 110 generates a registration request for the data source definition containing the input content of the registration screen 4 for the data source definition. Then, the management terminal 110 transmits the registration request for the data source definition to the operation support apparatus 300 via the network N. In response, the registration unit 341 of the operation support apparatus 300 receives the registration request for the data source definition from the management terminal 110 (S201).

Then, the registration unit 341 generates registration information on the basis of the input content contained in the received registration request (S202). For example, the registration unit 341 generates data source definition information 4110 from the input content of a data source ID 401, a connection method 402, and connection destination information 403. Further, the registration unit 341 generates data attribute information 4210 from the input content of data attribute information 41. Specifically, the registration unit 341 newly issues an attribute ID 4211, and generates the data attribute information 4210 by using the input content of an attribute name 412, processing logic 413, and setting information 414 as an attribute name 4212, processing logic 4213, and setting information 4214. Similarly, the registration unit 341 generates data attribute information 4220 and 4230 by using the input content of data attribute information 42 and 43. Then, the registration unit 341 associates a data source ID 4111 of the data source definition information 4110 with attribute IDs 4211 to 4231 of the data attribute information 4210 to 4230, and generates a source attribute related definition 4310.

Then, the registration unit 341 registers the generated registration information (the data source definition information 4110, the data attribute information 4210 to 4230, and the source attribute related definition 4310) in the storage unit 310 as a data source definition 314 (S203).

Subsequently, a case where a screen definition is registered via a registration screen of the screen definition provided by the operation support apparatus 300 will be described. For example, in response to manipulation of the administrative user U1, the management terminal 110 transmits a display request for the registration screen for the screen definition to the operation support apparatus 300 via the network N. In response to the display request, the operation support apparatus 300 returns the registration screen for the screen definition to the management terminal 110. In response, the management terminal 110 displays the received registration screen.

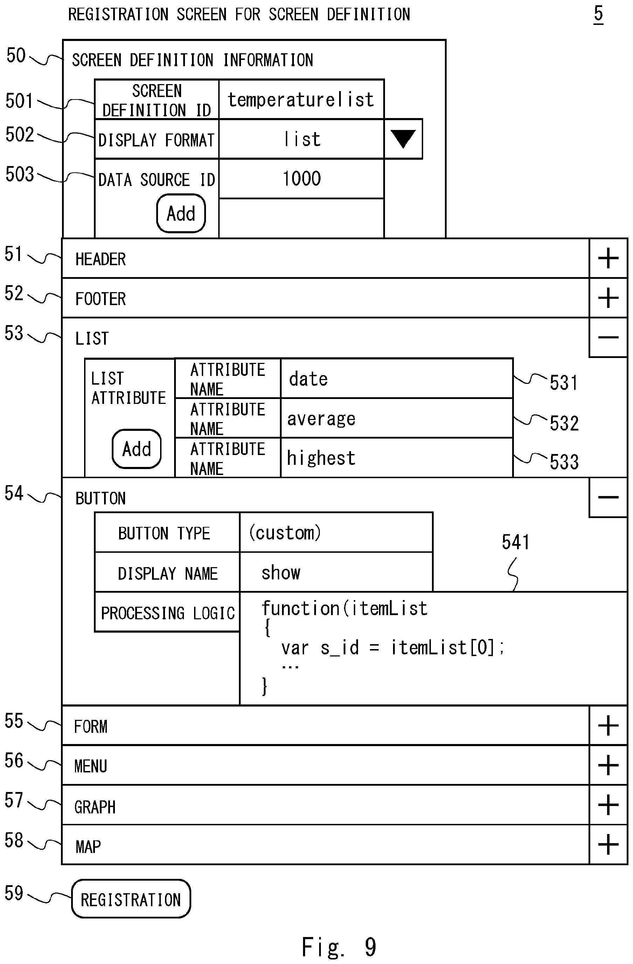

Fig. 9 is a view illustrating an example of a registration screen 5 for a screen definition according to the second example embodiment. The registration screen 5 for the screen definition includes screen definition information 50, a header 51, a footer 52, a list 53, a button 54, a form 55, a menu 56, a graph 57, a map 58, and a registration button 59. Note that the registration screen 5 for the screen definition may include entry fields for a unique object and metric. Further, Fig. 9 illustrates a state in the middle of input by the administrative user U1. Further, an example in which entry fields of the header 51, the footer 52, the form 55, the menu 56, the graph 57, and the map 58 are not displayed is illustrated. When a "+" button of each entry field is pressed, an individual entry field is expanded and displayed. Further, when a "-" button of each entry field is pressed, an individual entry field is closed and displayed.

The screen definition information 50 is an entry field for a screen definition ID 501, a display format 502, and a data source ID 503. The display format 502 allows selection of a list screen, a detailed data display screen, or a map dedicated screen from a pull-down. The data source ID 503 is an entry field for a data source ID, and two or more data source IDs can be inputted optionally. For example, when an "Add" button of the data source ID 503 is pressed, one entry field for the data source ID is added.

The header 51 is an entry field for information for customizing a header area of a display screen as a screen component. The footer 52 is an entry field for information for customizing a footer area of a display screen as a screen component.

The list 53 is an entry field for defining a display attribute of acquired data when displaying the list. The list 53 indicates that attribute names have been entered in entry fields for attribute names 531, 532, and 533. By providing the entry fields of the attribute names, it is possible to facilitate an input and a screen definition by the administrative user U1. Note that an entry field for an attribute ID may be used instead of the attribute name. Further, when an "Add" button for the list 53 is pressed, one entry field for the attribute name is added. Further, the list 53 may be provided with entry fields for various settings other than the attribute name. For example, an entry field for processing logic may be provided in association with each attribute name. The processing logic may be a process to be executed at the time of display of an attribute value.

The button 54 is an entry field for defining buttons that can be used in list display and detailed display. The button 54 includes an entry field of processing logic 541 in addition to a button type and a display name, for example. The button type may be output (download) of the list display content, update of the display content, approval (registration or update of the display content), instruction to execute a specific command to an external system, for example. The processing logic 541 is a definition of the processing logic that is executed when the button is pressed.

The form 55 is an entry field for defining a form, such as input or search, which can be used in detailed display. The menu 56 is an entry field for defining a menu list used as options in list display. The graph 57 is an entry field for defining graph display. The map 58 is an entry field for defining map display. Note that the form 55, the menu 56, the graph 57, and the map 58 may be provided with an attribute name such as the list 53 and an entry field of processing logic such as the button 54. Further, the list 53, the button 54, the form 55, the menu 56, the graph 57, and the map 58 may define a plurality of screen components within them.

The registration button 59 is a button for transmitting, to the operation support apparatus 300, a registration request including the input content of the screen definition information 50, the header 51, the footer 52, the list 53, the button 54, the form 55, the menu 56, the graph 57, and the map 58 when pressed.

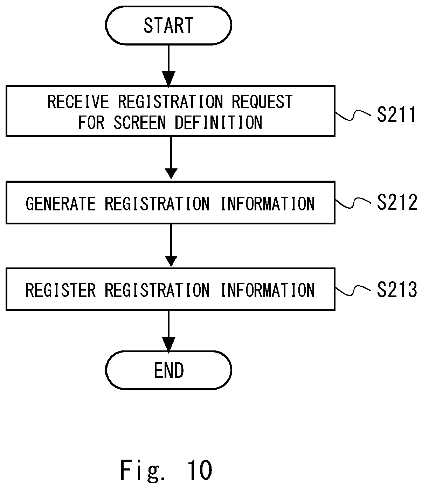

Fig. 10 is a flowchart illustrating a flow of registration processing of a screen definition according to the second example embodiment. First, the management terminal 110 receives and displays the input content of the registration screen 5 for the screen definition by input manipulation of the administrative user U1. At this time, when a "+" button is pressed, the management terminal 110 expands and displays details of each entry field. When a "-" button is pressed, the management terminal 110 closes and displays the details of each entry field. Further, the management terminal 110 further receives and displays the input content against the expanded entry field. Then, when the management terminal 110 receives press of the registration button 59 from the administrative user U1, the management terminal 110 generates a registration request for a screen definition including the input content of the registration screen 5 of the screen definition. Then, the management terminal 110 transmits the registration request for the screen definition to the operation support apparatus 300 via the network N. In response, the registration unit 341 of the operation support apparatus 300 receives the registration request for the screen definition from the management terminal 110 (S211).

Then, the registration unit 341 generates registration information on the basis of the input content included in the received registration request (S212). For example, the registration unit 341 generates screen definition information 5110 from the input content of the screen definition ID 501, the display format 502, and the data source ID 503. Further, the registration unit 341 newly issues a configuration ID corresponding to each of the map 58 from the header 51, sets a type corresponding to each screen component, and generates the screen configuration information 5210 and the like. For example, when the screen configuration information 5210 corresponding to the button 54 is generated, the registration unit 341 sets information indicating a "button" to the type 5212, and sets the content of processing logic 541 to the processing logic 5213. Note that the registration unit 341 also includes a display name and the like in the screen configuration information 5210 corresponding to the button 54. Then, the registration unit 341 associates the screen definition ID 5111 of the screen definition information 5110 with a configuration ID of each piece of screen configuration information to generate a configuration attribute related definition 5410. Further, the registration unit 341 converts an attribute name of each screen component into an attribute ID on the basis of the data source ID 503. For example, the registration unit 341 searches and specifies an attribute ID corresponding to the data source ID 503 "1000" and the attribute name 531 "date" on the basis of a source attribute related definition and data attribute information on the basis of the data source definition 314. Then, the registration unit 341 associates the configuration ID issued to the list 53 with the converted (and specified) attribute ID group to generate a configuration attribute related definition.

Then, the registration unit 341 registers, in the storage unit 310, the generated registration information (the screen definition information 5110, the screen configuration information 5210, the screen configuration related definition 5310, the configuration attribute related definition 5410, and the like) as the screen definition 315 (S213).

Note that the management terminal 110 may use a setting tool provided by the operation support apparatus 300 to generate an SQL statement (an Insert statement for each record) as a registration request. For example, at the time of pressing the registration button 49 or 59, the setting tool may generate, from the input content of the registration screen, a record to be inserted into each table of the data source definition 314 or the screen definition 315 as at Step S202 or S212, and output an Insert statement for the record. In that case, the management terminal 110 may connect to a database of the operation support apparatus 300 by a command line UI (User Interface) to execute the generated SQL statement.

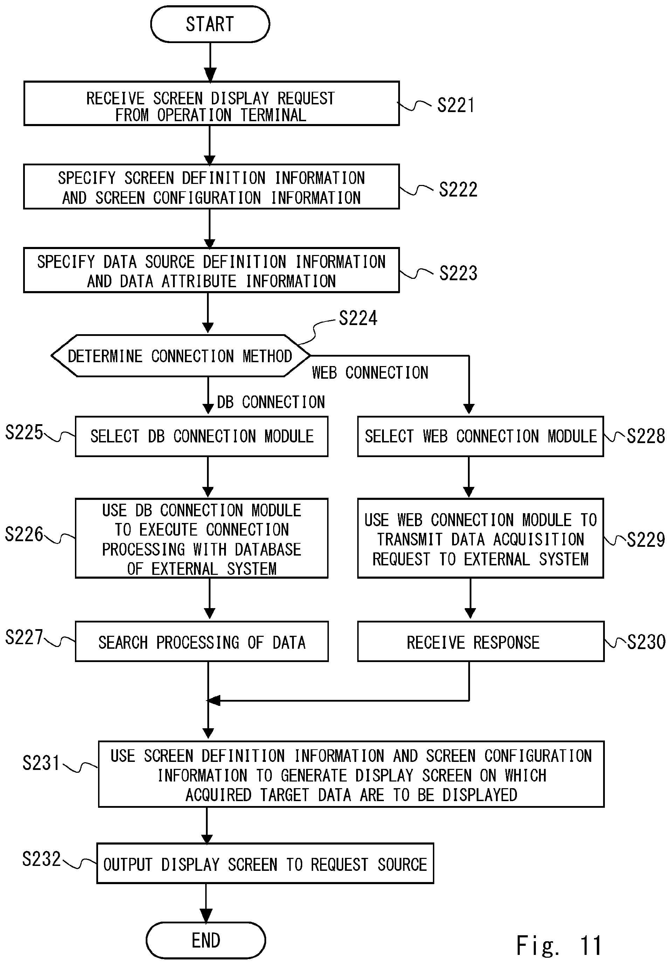

Fig. 11 is a flowchart illustrating a flow of screen display processing according to the second example embodiment. Here, it is assumed that the administrative user U1 has already registered in the operation support apparatus 300 a screen definition for a display screen for customizing and displaying the data content of a database managed by an external system and a data source definition thereof. Then, the operational user U2 browses the display screen.

First, in response to manipulation of the operational user U2, the operation terminal 120 transmits a screen display request for the display screen to the operation support apparatus 300 via the network N. At this time, a screen definition ID of the display screen is included in the screen display request. For example, the screen display request is an HTTP request message for URL including a host name and the screen definition ID of the operation support apparatus 300. In response, the specification unit 342 of the operation support apparatus 300 receives the screen display request from the operation terminal 120 (S221). Then, the specification unit 342 analyzes the received screen display request to specify the screen definition ID.

Next, the specification unit 342 specifies screen definition information and screen configuration information on the basis of the specified screen definition ID (S222). Specifically, as described above, the specification unit 342 specifies a data source ID and a configuration ID group associated with the specified screen definition ID, and specifies an attribute ID group associated with each configuration ID thus specified.

Then, the specification unit 342 specifies data source definition information and data attribute information on the basis of the data source ID and the attribute ID group thus specified (S223). At this time, the specification unit 342 specifies a connection method and connection destination information contained in the specified data source definition information.

Then, the selection unit 343 determines the specified connection method (S224). In a case where it is determined that the connection method is DB connection, the selection unit 343 selects the DB connection processing module 312 (S225). Then, the data acquisition unit 344 uses the DB connection processing module 312 to execute connection processing with the database 211 for the external system 210 on the basis of the connection destination information (S226). For example, the data acquisition unit 344 sets a URL for DB connection, and DB connectable user ID and password to the DB connection processing module 312, and executes the connection processing with the database 211 by the DB connection processing module 312.

Then, after the connection processing, the data acquisition unit 344 executes search processing for data corresponding to the specified data attribute in the database 211 (S227). For example, the data acquisition unit 344 issues, to the database 211, a search command designating a column "date", "average", and "highest" in a table "temperature". Then, the data acquisition unit 344 acquires a search result from the database 211.

On the other hand, in a case where it is determined at Step S224 that the connection method is WEB connection, the selection unit 343 selects the WEB connection processing module 313 (S228). Then, the data acquisition unit 344 uses the WEB connection processing module 313 to transmit, to the external system 220, a data acquisition request containing the connection destination information and the data attribute (S229). For example, the data acquisition unit 344 sets a URL of the WEB application server 221 for REST connection to the WEB connection processing module 313, and transmits an HTTP request to the WEB application server 221 by the WEB connection processing module 313. Then, the data acquisition unit 344 receives a response from the WEB application server 221 (S230).

After Step S227 or S230, the generation unit 345 uses the screen definition information and the screen configuration information to generate display screen for displaying acquired target data (S231). Specifically, the generation unit 345 reads out a screen template 316 corresponding to a display format contained in the specified screen definition information. Then, the generation unit 345 arranges a tag or the like according to a type of the specified screen configuration information at an arrangement position of each piece of screen configuration information in the screen template 316. Further, the generation unit 345 arranges the target data corresponding to the attribute ID group associated with the configuration ID at the arrangement position of each piece of screen configuration information. Similarly, the generation unit 345 embeds processing logic associated with the configuration ID at the arrangement position of each piece of screen configuration information. Further, the generation unit 345 embeds processing logic and setting information contained in the data attribute information corresponding to the attribute ID group associated with the configuration ID at the arrangement position of each piece of screen configuration information.

Then, the output unit 346 outputs the generated display screen to a request source (S232). Specifically, the output unit 346 transmits the generated display screen to the operation terminal 120 via the network N. In response, the operation terminal 120 displays the received display screen. Note that at Step S231, the generation unit 345 may generate screen generating control information containing the screen definition information and the screen configuration information thus specified and the acquired target data. For example, the generation unit 345 may generate the screen generating control information in a JSON format. In this case, the output unit 346 transmits the generated screen generating control information to the operation terminal 120 via the network N. In response, the operation terminal 120 may use a predetermined screen template from the received screen generating control information to execute the process corresponding to Step S231 described above and generate the display screen.

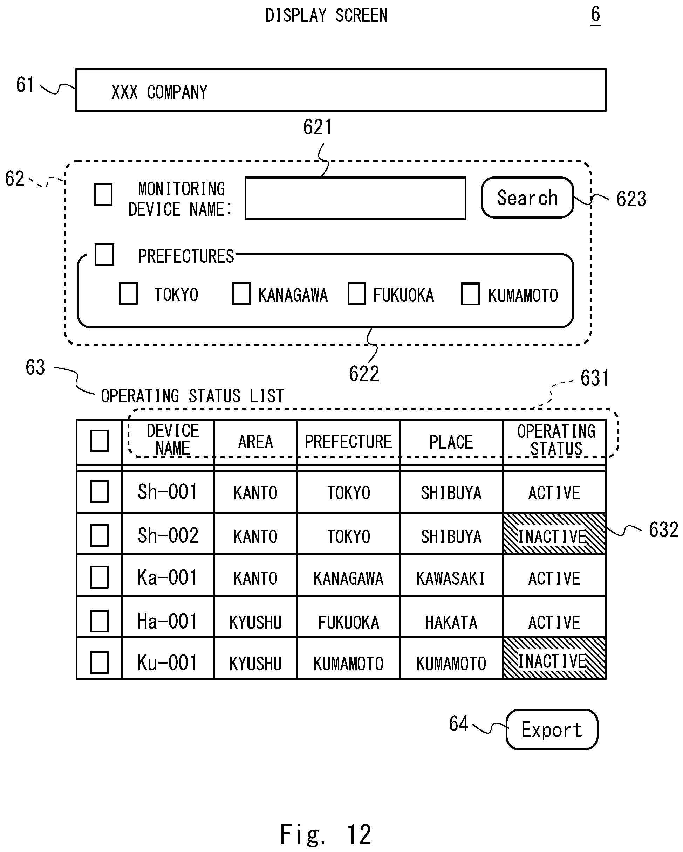

Fig. 12 is a view illustrating an example of a display screen 6 according to the second example embodiment. The display screen 6 includes a header 61, a search form field 62, a list display field 63, and an export button 64. The header 61 has the content generated on the basis of display information and setting information of screen configuration information whose type is a header. The search form field 62 has the content generated on the basis of screen configuration information whose type is a form. The search form field 62 includes a monitoring device name entry field 621, a prefecture selection field 622, and a search button 623. The monitoring device name entry field 621 is an entry field for a name of a server or the like, which is an external system as a search target. The monitoring device name entry field 621 is generated on the basis of a display name defined in the screen configuration information whose type is the form and option settings of a checkbox. The prefecture selection field 622 is a column for selecting a condition of prefectures where the server or the like as the search target is installed. The prefecture selection field 622 is generated on the basis of whether "Tokyo" and the like are set to display names defined in the screen configuration information whose type is the form or not from a search result of prefectures to which an installation location of a monitoring target apparatus belongs from a predetermined database. Further, the prefecture selection field 622 is generated on the basis of option settings of checkboxes. The search button 623 is a button for transmitting, to the database of the external system, a search request using the monitoring device name entry field 621 and the prefecture selection field 622 as search criteria when pressed. The search button 623 may be automatically generated along with a search form.

The list display field 63 has the content generated on the basis of display information, data attribute, processing logic, and setting information of screen configuration information whose type is a list. The list display field 63 includes an attribute name 631 and operating statuses 632. The attribute name 631 is a display name of each piece of data attribute information (column) associated with the screen configuration information whose type is the list. Further, each record displayed in the list display field 63 is target data acquired on the basis of each piece of data attribute information associated with the screen configuration information whose type is the list. The operating statuses 632 indicates that processing logic is set to the data attribute information associated with the screen configuration information whose type is the list and display is processed in accordance with the processing logic. For example, the processing logic is a process of displaying an attribute "operating status" in color in a case where acquired data thereof are "inactive". By defining the processing logic in this manner, a flexible display control can be realized. Of course, the processing logic is not limited to this.

The export button 64 is a button for executing a process of outputting a record checked in the list display field 63 to the operation terminal 120 when pressed. The export button 64 displays a display name defined in screen configuration information whose type is a button, and the processing logic is embedded therein as a process of outputting a search request and a search result.

Thus, according to the present example embodiment, it is possible to easily customize a wide variety of screen components (buttons, menus, lists, forms, unique objects, graphs, a header, a footer, metrics, maps, and the like). Further, it becomes possible to easily realize visualization using a wide variety of existing data sources. For example, in a case where a display screen for a certain database is defined once and a display screen for another database whose connection destination or connection method is different is then to be defined, it is possible to easily handle it by adding or changing data source definitions. Further, in a case where a large number of display screens similar to an existing data source is to be created, it is possible to easily add screens by using screen definitions. Therefore, it is possible to reduce the amount of system modification at that time. In particular, it is possible to reduce the amount of program coding. Further, since the processing logic can be set to the data source definition or the screen definition, a detailed display control can be realized easily.

### <Third Example Embodiment>

A third example embodiment is a modification example of the second example embodiment described above. It is assumed that a request source according to the third example embodiment is a content provision source server and a screen definition ID that identifies a screen definition is contained in the content. For that reason, a specification unit according to the third example embodiment receives a screen display request designating a screen definition ID from the provision source server at the time of display processing of the content in the provision source server. Then, the specification unit specifies a screen definition corresponding to the screen definition ID. In other words, although the operation support apparatus 300 differs from that according to the second example embodiment in the request source of the screen display request, it is possible to use a similar generating process for display screen information.

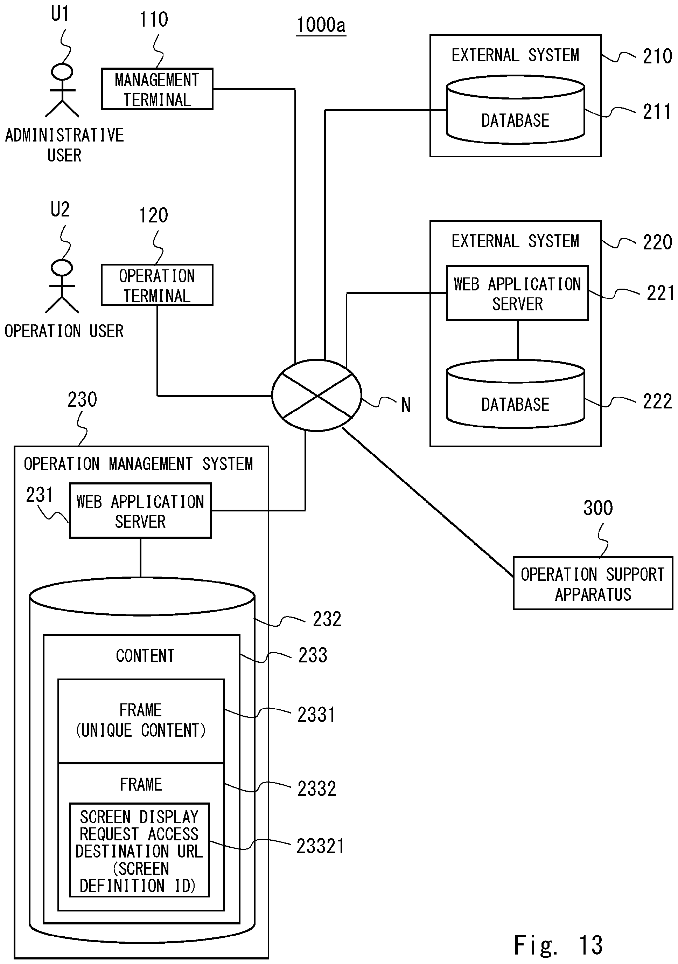

Fig. 13 is a block diagram illustrating the overall configuration of an operation support system 1000a according to the third example embodiment. As compared with Fig. 3, an operation management system 230 is added to the operation support system 1000a. Since the other configuration is similar to that in Fig. 3, illustration and description thereof will be omitted as appropriate.

The operation management system 230 is an existing information system used by an operational user U2 or the like to manage operation of an external system 210 or an external system 220 by modifying the content of operation management. The operation management system 230 includes a WEB application server 231 and a storage device 232. The storage device 232 stores content 233 for the operation management. The content 233 is template data of a WEB page (display screen), which is dynamically generated. Then, a plurality of frames 2331 and a frame 2332 are defined (or described) in the content 233. Each of the frames 2331 is a unique content area of the operation management system 230. A screen display request access destination URL 23321 is defined in the frame 2332. For example, the screen display request access destination URL 23321 may be defined in the frame 2332 by using an iframe tag of HTML5. The screen display request access destination URL 23321 is access destination information containing the screen definition ID that has already been registered in the operation support apparatus 300. For example, the screen display request access destination URL 23321 is a URL including a host name and the screen definition ID of the operation support apparatus 300.

The WEB application server 231 is connected to a network N. In a case where the WEB application server 231 receives an access request to the content 233 via the network N from an operation terminal 120 or the like, the WEB application server 231 analyzes the content 233, generates a display screen according to a definition of each frame, and returns it to the operation terminal 120. At that time, the WEB application server 231 transmits a request to the screen display request access destination URL 23321 contained in the frame 2332. Namely, the WEB application server 231 transmits an HTTP request to the operation support apparatus 300 via the network N using the screen display request access destination URL 23321 as a destination.

In response, the operation support apparatus 300 executes the processes at Steps S221 to S232 described above on the basis of a screen definition ID designated by the HTTP request received from the WEB application server 231, generates a display screen, and returns it thereto. Then, the WEB application server 231 receives the display screen as a response of the HTTP request from the operation support apparatus 300. Then, the WEB application server 231 embeds the received display screen in the frame 2332 to generate a display screen corresponding to the content 233. Then, the WEB application server 231 returns the display screen to the operation terminal 120 that is a request source. Note that the operation support apparatus 300 may generate and return screen generating control information instead of the display screen as well as the second example embodiment described above.

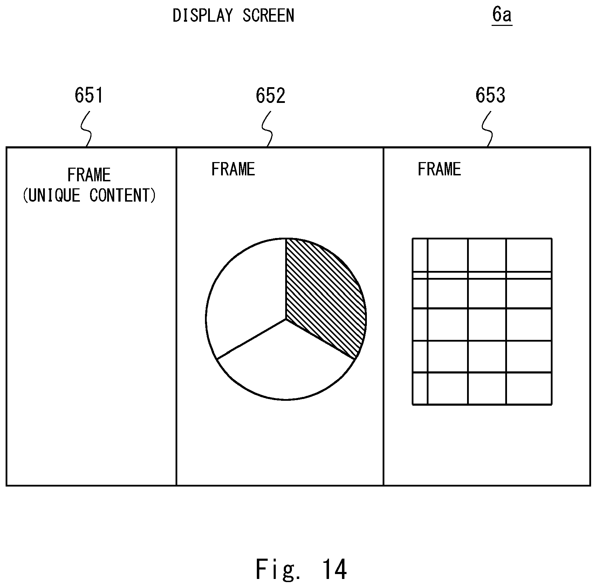

Fig. 14 is a view illustrating an example of a display screen 6a according to the third example embodiment. The display screen 6a includes frames 651, 652, and a frame 653. The frame 651 is the unique content of the operation management system 230. The frames 652 and 653 indicate that a graph display screen and a list display screen generated in the operation support apparatus 300 are displayed by setting the screen display request access destination URL 23321 including different screen definition IDs.

Thus, according to the third example embodiment, it is possible to achieve the similar effects to those according to the second example embodiment described above. In addition, in the third example embodiment, a function of generating display screen information of the operation support apparatus 300 can be called from the content of the external system (the operation management system) itself. Therefore, a more flexible display control can be realized easily by finely responding to the needs of the operational users.

### <Fourth Example Embodiment>

A fourth example embodiment is a modification example of the second or third example embodiment described above. At least a part of a plurality of screen components according to the fourth example embodiment contains operation information for an external system. Then, in response to manipulation of a user against an arranged screen component, a generation unit according to the fourth example embodiment embeds a process of transmitting a processing request based on operation information contained in the screen component to the external system to generate a display screen. As a result, an operational user who visually confirms a display screen customized according to the second or third example embodiment can continue to issue the processing request for the display screen to the external system in accordance with the display content. Namely, there is no need for the operational user to separately carry out operation manipulation to the external system.

Here, the operation information contains processing logic in at least any of data acquisition or data update for a database or instructions to the external system. For that reason, it is possible to realize a flexible control for the external system.

Further, the processing request according to the fourth example embodiment contains at least any request of a data acquisition process or a data update process for the database, or instruction execution for the external system. For that reason, a flexible control for the external system can be realized.

Note that since a configuration of an operation support system according to the fourth example embodiment is similar to that of Fig. 3 or Fig. 13 described above, illustration and description of the overlapping content will be omitted as appropriate.

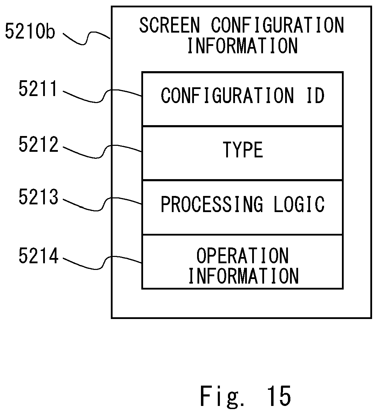

An operation support apparatus 300 according to the fourth example embodiment is one in which operation information is added to the screen configuration information in the screen definition 315. Fig. 15 is a view illustrating a configuration example of screen configuration information 5210b according to the fourth example embodiment. The screen configuration information 5210b contains operation information 5214 in addition to a configuration ID 5211, a type 5212, and processing logic 5213. As described above, the operation information 5214 contains processing logic in at least any of data acquisition or data update for the database, or an instruction to the external system.

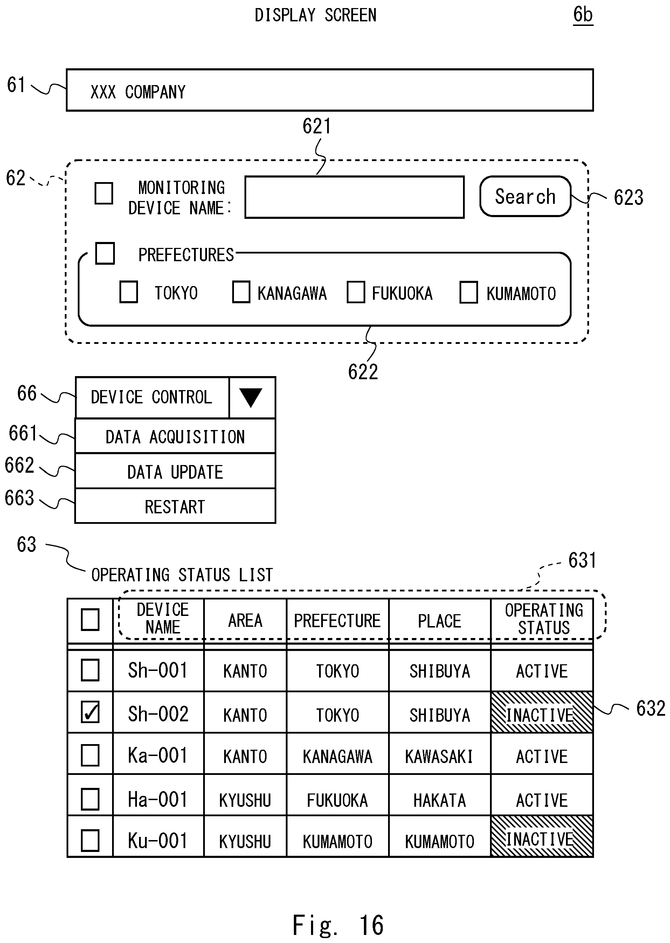

Fig. 16 is a view illustrating an example of a display screen 6b according to the fourth example embodiment. The display screen 6b is one to which a device control menu 66 is added in addition to the header 61, the search form field 62, and the list display field 63 described above. The device control menu 66 has the content generated on the basis of display information, processing logic, setting information, and operation information of the screen configuration information whose type is a menu. The device control menu 66 is a selection field in which any one of a plurality of menus including data acquisition 661, data update 662, and restart 663 can be selected by a pull-down. The operation information is set to each of the data acquisition 661, the data update 662, and the restart 663. When any menu is selected, a processing request based on the set operation information is transmitted to the database. Namely, when an operational user U2 selects any of the data acquisition 661, the data update 662, and the restart 663, the operation according to the selected menu is executed for the external system. Data acquisition for a record checked in the list display field 63 is executed from the database of the external system, and operation information to be outputted to the operation terminal 120 is set to the data acquisition 661. Note that the data acquisition 661 may be set with processing logic similar to that of the export button 64 described above. In a case where each item value of a display record in the list display field 63 can be edited, operation information for transmitting a processing request for updating data of the checked record in the database of the external system is set to the data update 662. Alternatively, operation information for updating data of the content of a record inputted into an update data entry field whose display is omitted in Fig. 16 in the database of the external system is set to the data update 662. Operation information for transmitting a restart instruction of an OS, a WEB application server, a database, or the like to the external system when selected is set to the restart 663.

Thus, according to the fourth example embodiment, it is possible to achieve the similar effects to those according to the second or third example embodiment described above. In addition, according to the fourth example embodiment, the operational user U2 can acquire and visualize information from a database of an existing external system, and then change the settings for the external system or carry out a processing request (restart, stop, job execution, and the like) to the external system. In other words, the operational user U2 can confirm a state of an information system as an operational target from a display screen based on the display screen information generated by the operation support apparatus 300, and continues to issue an instruction for processing to the external system on the same display screen. Therefore, it is possible to realize further operation support.

### <Another Example Embodiment>

Note that the configurations of hardware have been described in the example embodiments described above, but the present disclosure is not limited to these. The present disclosure can also be realized by causing a CPU to execute computer programs for arbitrary processes.

In the examples described above, programs can be stored using various types of non-transitory computer readable mediums (non-transitory computer readable medium), and be supplied to a computer. The non-transitory computer readable mediums include various types of tangible recording mediums (tangible storage mediums). Examples of the non-transitory computer readable mediums include magnetic recording media (for example, flexible disks, magnetic tapes, and hard disk drive), magneto-optical recording media (for example, magneto-optical discs), CD-ROMs (Read Only Memories), CD-Rs, CD-R/Ws, DVDs (Digital Versatile Discs), semiconductor memories (for example, mask ROMs, PROMs (Programmable ROMs), EPROMs (Erasable PROMs), flash ROMs, and RAMs (Random Access Memories)). Further, the programs may be provided to the computer by various types of transitory computer readable mediums (transitory computer readable mediums). Examples of the transitory computer readable mediums include electrical signals, optical signals, and electromagnetic wave. The transitory computer readable mediums can supply the programs to the computer via wired communication paths such as electrical wires and optical fibers, or wireless communication paths.

Note that the present disclosure is not limited to the example embodiments described above, and can be modified as appropriate without departing from the spirit and scope of the present disclosure. Further, the present disclosure may be implemented by appropriately combining the respective example embodiments.

A part or all of the example embodiments described above can be described as Supplementary Notes described below, but are not limited to the followings.

### (Supplementary Note A1)

An operation support apparatus comprising:
a registration unit configured to register a data source definition and a screen definition, the data source definition containing a connection method, connection destination information, and a data attribute for accessing a database managed by an external system, the screen definition containing a data attribute of a processing target and a display format of target data;
a specification unit configured to specify a screen definition designated by a screen display request received from a request source, and specify a data source definition corresponding to a data attribute contained in the specified screen definition;
a selection unit configured to select connection processing means corresponding to the connection method contained in the specified data source definition;
a data acquisition unit configured to use the selected connection processing means to acquire target data from the database on a basis of connection destination information and a data attribute contained in the specified data source definition;
a generation unit configured to generate display screen information containing the display format contained in the specified screen definition and the acquired target data; and
an output unit configured to output the generated display screen information to the request source.

### (Supplementary Note A2)

The operation support apparatus according to Supplementary Note A1,
wherein the screen definition contains a plurality of screen components,
wherein at least a part of the plurality of screen components includes the data attribute contained in the data source definition, and
wherein the generation unit is further configured to arrange each of the screen components at a display position according to the display format, and generate the display screen information so as to display the acquired target data on the screen component containing the data attribute.

### (Supplementary Note A3)

The operation support apparatus according to Supplementary Note A2,
wherein at least a part of the plurality of screen components includes processing logic, and
wherein the generation unit is further configured to generate the display screen information so as to contain the processing logic included in the arranged screen component.

### (Supplementary Note A4)

The operation support apparatus according to Supplementary Note A2 or A3,
wherein at least a part of the plurality of screen components includes operation information for the external system, and
wherein the generation unit is further configured to generate the display screen information by embedding a process for transmitting a processing request based on the operation information contained in the screen component to the external system in response to manipulation of a user against the arranged screen component.

### (Supplementary Note A5)

The operation support apparatus according to Supplementary Note A4,
wherein the operation information contains processing logic for at least any of data acquisition or data update with respect to the database, or an instruction for the external system.

### (Supplementary Note A6)

The operation support apparatus according to Supplementary Note A4 or A5,
wherein the processing request includes at least any request of a data acquisition process or a data update process with respect to the database, or execution of an instruction for the external system.

### (Supplementary Note A7)

The operation support apparatus according to any one of Supplementary Notes A1 to A6,
wherein the data source definition contains processing logic in the data attribute, and
wherein the generation unit is further configured to generate the display screen information so as to contain the processing logic contained in a data attribute corresponding to the acquired target data.

### (Supplementary Note A8)

The operation support apparatus according to any one of Supplementary Notes A1 to A7,
wherein the request source is a provision source server of content,
wherein a screen definition ID for identifying the screen definition is contained in the content, and
wherein the specification unit is further configured to receive a screen display request designating the screen definition ID from the provision source server at a time of display processing of the content in the provision source server, and specify the screen definition corresponding to the screen definition ID.

### (Supplementary Note A9)

The operation support apparatus according to any one of Supplementary Notes A1 to A8,
wherein, in a case where the connection method is database connection, the data acquisition unit is further configured to use the selected connection processing means to execute connection processing with the database on a basis of the connection destination information for the external system, and
wherein the data acquisition unit is further configured to acquire the target data after the connection processing by executing search processing for data corresponding to the data attribute against the database.

### (Supplementary Note A10)

The operation support apparatus according to any one of Supplementary Notes A1 to A9,
wherein, in a case where the connection method is WEB connection, the data acquisition unit is further configured to use the selected connection processing means to transmit a data acquisition request including the connection destination information and the data attribute to the external system, and receive a response from the external system, thereby acquiring the target data.

### (Supplementary Note A11)

The operation support apparatus according to any one of Supplementary Notes A1 to A10,
wherein the generation unit is further configured to generate, as the display screen information, a display screen for displaying the acquired target data in accordance with the display format contained in the specified screen definition, and
wherein the output unit is further configured to output the generated display screen to the request source.

### (Supplementary Note A12)

The operation support apparatus according to any one of Supplementary Notes A1 to A10,
wherein the generation unit is further configured to generate, as the display screen information, screen generating control information for generating, in the request source, a display screen for displaying the acquired target data in accordance with the display format, and
wherein the output unit is further configured to output the generated screen generating control information to the request source.

### (Supplementary Note B1)

An operation support system comprising:
a database managed by an external system; and
an operation support apparatus communicably connected to the external system,
wherein the operation support apparatus includes:
   a registration unit configured to register a data source definition and a screen definition, the data source definition containing a connection method, connection destination information, and a data attribute for accessing the database managed by the external system, the screen definition containing a data attribute of a processing target and a display format of target data;
   a specification unit configured to specify a screen definition designated by a screen display request received from a request source, and specify a data source definition corresponding to a data attribute contained in the specified screen definition;
   a selection unit configured to select connection processing means corresponding to a connection method contained in the specified data source definition;
   a data acquisition unit configured to use the selected connection processing means to acquire target data from the database on a basis of connection destination information and a data attribute contained in the specified data source definition;
   a generation unit configured to generate display screen information containing a display format contained in the specified screen definition and the acquired target data; and
   an output unit configured to output the generated display screen information to the request source.

### (Supplementary Note B2)

The operation support system according to Supplementary Note B1,
wherein the screen definition contains a plurality of screen components,
wherein at least a part of the plurality of screen components includes the data attribute contained in the data source definition, and
wherein the generation unit is further configured to arrange each of the screen components at a display position according to the display format, and generate the display screen information so as to display the acquired target data on the screen component containing the data attribute.

### (Supplementary Note C1)

An operation support method executed by a computer, the method comprising:
registering a data source definition and a screen definition, the data source definition containing a connection method, connection destination information, and a data attribute for accessing a database managed by an external system, the screen definition containing a data attribute of a processing target and a display format of target data;
specifying a screen definition designated by a screen display request received from a request source, and specify a data source definition corresponding to a data attribute contained in the specified screen definition;
selecting connection processing means corresponding to a connection method contained in the specified data source definition;
using the selected connection processing means to acquire target data from the database on a basis of connection destination information and a data attribute contained in the specified data source definition;
generating display screen information containing a display format contained in the specified screen definition and the acquired target data; and
outputting the generated display screen information to the request source.

### (Supplementary Note D1)

An operation support program causing a computer to execute:
a registration process configured to register a data source definition and a screen definition, the data source definition containing a connection method, connection destination information, and a data attribute for accessing a database managed by an external system, the screen definition containing a data attribute of a processing target and a display format of target data;
a specification process configured to specify a screen definition designated by a screen display request received from a request source, and specify a data source definition corresponding to a data attribute contained in the specified screen definition;
a selection process configured to select connection processing means corresponding to a connection method contained in the specified data source definition;
a data acquisition process configured to use the selected connection processing means to acquire target data from the database on a basis of connection destination information and a data attribute contained in the specified data source definition;
a generation process configured to generate display screen information containing a display format contained in the specified screen definition and the acquired target data; and
an output process configured to output the generated display screen information to the request source.

As described above, the present invention has been described with reference to the example embodiments (and the examples), but the present invention is not limited to the example embodiment (and the examples) described above. Various modifications that can be understood by a person having ordinary skill in the art can be made to the configurations and the details of the present invention within the scope of the present invention.

This application is based upon and claims the benefit of priority from Japanese Patent Application No. 2021-028304, filed on February 25, 2021, and the disclosure of which is incorporated herein in its entirety by reference.

### Reference Signs List

- 1: operation support apparatus
- 11: registration unit
- 12: specification unit
- 13: selection unit
- 14: data acquisition unit
- 15: generation unit
- 16: output unit
- 1000: operation support system
- 1000a: operation support system
- 110: management terminal
- 120: operation terminal
- 210: external system
- 211: database
- 220: external system
- 221: WEB application server
- 222: database
- 230: operation management system
- 231: WEB application server
- 232: storage device
- 233: content
- 2331: frame
- 2332: frame
- 23321: screen display request access destination URL
- 300: operation support apparatus
- 310: storage unit
- 311: program
- 312: DB connection processing module
- 313: WEB connection processing module
- 314: data source definition
- 315: screen definition
- 316: screen template
- 320: memory
- 330: communication unit
- 340: control unit
- 341: registration unit
- 342: specification unit
- 343: selection unit
- 344: data acquisition unit
- 345: generation unit
- 346: output unit
- 4110: data source definition information
- 4111: data source ID
- 4112: connection method
- 4113: connection destination information
- 41m0: data source definition information
- 41m1: data source ID
- 41m2: connection method
- 41m3: connection destination information
- 4210: data attribute information
- 4211: attribute ID
- 4212: attribute name
- 4213: processing logic
- 4214: setting information
- 42n0: data attribute information
- 42n1: attribute ID
- 42n2: attribute name
- 42n3: processing logic
- 42n4: setting information
- 4310: source attribute related definition
- 4311: data source ID
- 43121: attribute ID
- 4312x: attribute ID
- 43m0: source attribute related definition
- 43m1: data source ID
- 43m21: attribute ID
- 43m2y: attribute ID
- 5110: screen definition information
- 5111: screen definition ID
- 5112: display format
- 5113: data source ID
- 5110: screen definition information
- 5111: screen definition ID
- 51i2: display format
- 51i3: data source ID
- 5210: screen configuration information
- 5210b: screen configuration information
- 5211: configuration ID
- 5212: type
- 5213: processing logic
- 5214: operation information
- 52j0: screen configuration information
- 52j1: configuration ID
- 52j2: type
- 52j3: processing logic
- 5310: screen configuration related definition
- 5311: screen definition ID
- 53121: configuration ID
- 5312z: configuration ID
- 53i0: screen configuration related definition
- 53i1: screen definition ID
- 53121: configuration ID
- 53i2w: configuration ID
- 5410: configuration attribute related definition
- 5411: configuration ID
- 54121: attribute ID
- 5412p: attribute ID
- 54j0: configuration attribute related definition
- 54j1: configuration ID
- 54j21: attribute ID
- 54j2q: attribute ID
- 4: registration screen for data source definition
- 40: data source definition
- 401: data source ID
- 402: connection method
- 403: connection destination information
- 41: data attribute information
- 411: attribute ID
- 412: attribute name
- 413: processing logic
- 414: setting information
- 42: data attribute information
- 421: attribute ID
- 422: attribute name
- 423: processing logic
- 424: setting information
- 43: data attribute information
- 431: attribute ID
- 432: attribute name
- 433: processing logic
- 434: setting information
- 435: Add button
- 49: registration button
- 5: registration screen for screen definition
- 50: screen definition information
- 501: screen definition ID
- 502: display format
- 503: data source ID
- 51: header
- 52: footer
- 53: list
- 531: attribute name
- 532: attribute name
- 533: attribute name
- 54: button
- 541: processing logic
- 55: form
- 56: menu
- 57: graph
- 58: map
- 59: registration button
- 6: display screen
- 61: header
- 62: search form field
- 621: monitoring device name entry field
- 622: prefecture selection field
- 623: search button
- 63: list display field
- 631: attribute name
- 632: operating status
- 64: export button
- 6a: display screen
- 651: frame
- 652: frame
- 653: frame
- 6b: display screen
- 66: device control menu
- 661: data acquire
- 662: data update
- 663: restart
- N: network
- U1: administrative user
- U2: operational user

## Claims

1. An operation support apparatus comprising:
registration means configured to register a data source definition and a screen definition, the data source definition containing a connection method, connection destination information, and a data attribute for accessing a database managed by an external system, the screen definition containing a data attribute of a processing target and a display format of target data;
specification means configured to specify a screen definition designated by a screen display request received from a request source, and specify a data source definition corresponding to a data attribute contained in the specified screen definition;
selection means configured to select connection processing means corresponding to a connection method contained in the specified data source definition;
data acquisition means configured to use the selected connection processing means to acquire target data from the database on a basis of connection destination information and a data attribute contained in the specified data source definition;
generation means configured to generate display screen information containing a display format contained in the specified screen definition and the acquired target data; and
output means configured to output the generated display screen information to the request source.

2. The operation support apparatus according to claim 1,
wherein the screen definition contains a plurality of screen components,
wherein at least a part of the plurality of screen components includes the data attribute contained in the data source definition, and
wherein the generation means is further configured to arrange each of the screen components at a display position according to the display format, and generate the display screen information so as to display the acquired target data on the screen component containing the data attribute.

3. The operation support apparatus according to claim 2,
wherein at least a part of the plurality of screen components includes processing logic, and
wherein the generation means is further configured to generate the display screen information so as to contain the processing logic included in the arranged screen component.

4. The operation support apparatus according to claim 2 or 3,
wherein at least a part of the plurality of screen components includes operation information for the external system, and
wherein the generation means is further configured to generate the display screen information by embedding a process for transmitting a processing request based on the operation information contained in the screen component to the external system in response to manipulation of a user against the arranged screen component.

5. The operation support apparatus according to claim 4,
wherein the operation information contains processing logic for at least any of data acquisition or data update with respect to the database, or an instruction for the external system.

6. The operation support apparatus according to claim 4 or 5,
wherein the processing request includes at least any request of a data acquisition process or a data update process with respect to the database, or execution of an instruction for the external system.

7. The operation support apparatus according to any one of claims 1 to 6,
wherein the data source definition contains processing logic in the data attribute, and
wherein the generation means is further configured to generate the display screen information so as to contain the processing logic contained in a data attribute corresponding to the acquired target data.

8. The operation support apparatus according to any one of claims 1 to 7,
wherein the request source is a provision source server of content,
wherein a screen definition ID for identifying the screen definition is contained in the content, and
wherein the specification means is further configured to receive a screen display request designating the screen definition ID from the provision source server at a time of display processing of the content in the provision source server, and specify the screen definition corresponding to the screen definition ID.

9. The operation support apparatus according to any one of claims 1 to 8,
wherein, in a case where the connection method is database connection, the data acquisition means is further configured to use the selected connection processing means to execute connection processing with the database on a basis of the connection destination information for the external system, and
wherein the data acquisition means is further configured to acquire the target data after the connection processing by executing search processing for data corresponding to the data attribute against the database.

10. The operation support apparatus according to any one of claims 1 to 9,
wherein, in a case where the connection method is WEB connection, the data acquisition means is further configured to use the selected connection processing means to transmit a data acquisition request including the connection destination information and the data attribute to the external system, and receive a response from the external system, thereby acquiring the target data.

11. The operation support apparatus according to any one of claims 1 to 10,
wherein the generation means is further configured to generate, as the display screen information, a display screen for displaying the acquired target data in accordance with the display format contained in the specified screen definition, and
wherein the output means is further configured to output the generated display screen to the request source.

12. The operation support apparatus according to any one of claims 1 to 10,
wherein the generation means is further configured to generate, as the display screen information, screen generating control information for generating, in the request source, a display screen for displaying the acquired target data in accordance with the display format, and
wherein the output means is further configured to output the generated screen generating control information to the request source.

13. An operation support system comprising:
a database managed by an external system; and
an operation support apparatus communicably connected to the external system,
wherein the operation support apparatus includes:
registration means configured to register a data source definition and a screen definition, the data source definition containing a connection method, connection destination information, and a data attribute for accessing the database managed by the external system, the screen definition containing a data attribute of a processing target and a display format of target data;
specification means configured to specify a screen definition designated by a screen display request received from a request source, and specify a data source definition corresponding to a data attribute contained in the specified screen definition;
selection means configured to select connection processing means corresponding to a connection method contained in the specified data source definition;
data acquisition means configured to use the selected connection processing means to acquire target data from the database on a basis of connection destination information and a data attribute contained in the specified data source definition;
generation means configured to generate display screen information containing a display format contained in the specified screen definition and the acquired target data; and
output means configured to output the generated display screen information to the request source.

14. An operation support method executed by a computer, the method comprising:
registering a data source definition and a screen definition, the data source definition containing a connection method, connection destination information, and a data attribute for accessing a database managed by an external system, the screen definition containing a data attribute of a processing target and a display format of target data;
specifying a screen definition designated by a screen display request received from a request source, and specify a data source definition corresponding to a data attribute contained in the specified screen definition;
selecting connection processing means corresponding to a connection method contained in the specified data source definition;
using the selected connection processing means to acquire target data from the database on a basis of connection destination information and a data attribute contained in the specified data source definition;
generating display screen information containing a display format contained in the specified screen definition and the acquired target data; and
outputting the generated display screen information to the request source.

15. A non-transitory computer readable medium in which an operation support program is stored, the operation support program causing a computer to execute:
a registration process configured to register a data source definition and a screen definition, the data source definition containing a connection method, connection destination information, and a data attribute for accessing a database managed by an external system, the screen definition containing a data attribute of a processing target and a display format of target data;
a specification process configured to specify a screen definition designated by a screen display request received from a request source, and specify a data source definition corresponding to a data attribute contained in the specified screen definition;
a selection process configured to select connection processing means corresponding to a connection method contained in the specified data source definition;
a data acquisition process configured to use the selected connection processing means to acquire target data from the database on a basis of connection destination information and a data attribute contained in the specified data source definition;
a generation process configured to generate display screen information containing a display format contained in the specified screen definition and the acquired target data; and
an output process configured to output the generated display screen information to the request source.
